# EUROPEAN PATENT APPLICATION

(11) **EP 1 394 913 A2**
(43) Date of publication of application: **03.03.2004**
(21) Application number: 03253547.8
(22) Date of filing: 04.06.2003
(51) Int. Cl.: H02B 1/06

(54) **Apparatus and method of controlling access to a service area of an equipment cabinet**

(30) Priority: 26.07.2002 US 206525
(71) Applicant: NCR International, Inc., Dayton, Ohio 45479 (US)
(72) Inventor: Hartling, James D. A., Waterloo, Ontario N2L IM1 (CA); Gamble, Brian W., Waterloo, Ontario N2V 1A9 (CA); Tarbutt, Vernon W., Kitchener, Ontario N2M 4G4 (CA)
(74) Representative: Williamson, Brian

(57) **Abstract**

A cabinet has an opening and a panel which covers the opening. Electrical equipment is disposed in the cabinet and is operable when high voltage is applied thereto. An interlock mechanism is moveable between a locked position in which the panel covers the opening to prevent access to the electrical equipment and an unlocked position in which the panel can be opened or removed to allow access to the electrical equipment. A residual voltage associated with the electrical equipment when high voltage is removed from the electrical equipment is monitored. The interlock mechanism is moved from the locked position to the unlocked position allow access to the electrical equipment when the residual voltage decreases below a predetermined reference value.

## Description

The present invention relates to high voltages in equipment cabinets, and is particularly directed to an apparatus and method of controlling access to a service area of an equipment cabinet.

Some electrical equipment require high voltage to operate. Such equipment is usually contained in a cabinet to protect service personnel from high voltage when high voltage is applied to the equipment. Sometimes an interlock mechanism is enabled when high voltage is applied to the equipment in the cabinet to prevent a door, a cover panel, or the like from being either opened or removed which would allow service personnel to access the equipment in the cabinet. The interlock mechanism is disabled to allow the door, the cover panel, or the like to be either opened or removed when high voltage applied to the equipment is either disconnected or removed. When the interlock mechanism is disabled, service personnel is allowed to access the equipment in the cabinet.

For some equipment, residual voltage may be present after high voltage applied to the equipment is disconnected or removed. Warnings about the possibility of the presence of residual voltage are usually documented in service materials, and such warnings may be labeled on the equipment. Even though warnings are usually documented in service materials and may be labeled on the equipment, service personnel may often times overlook these warnings.

In accordance with one aspect of the present invention, an apparatus is provided for controlling access to a service area of a cabinet in which equipment is disposed. The apparatus comprises means for monitoring a residual electrical characteristic when high voltage applied to the equipment is removed. Means is provided for releasing an interlock mechanism to allow access to the service area of the cabinet when the residual electrical characteristic decreases below a predetermined reference level.

Preferably, the monitoring means includes means for monitoring a residual voltage, and the releasing means includes means for releasing an interlock mechanism when the residual voltage decreases below a predetermined voltage level.

In accordance with another aspect of the present invention, an apparatus comprises a cabinet including means defining an opening and a panel which covers the opening. The apparatus further comprises electrical equipment disposed in the cabinet and operable when high electrical energy is applied thereto. An interlock mechanism is moveable between a locked position in which the panel covers the opening to prevent access to the electrical equipment and an unlocked position in which the panel can be opened or removed to allow access to the electrical equipment. Reference means is provided for providing a predetermined reference value. Means is provided for monitoring a residual electrical characteristic associated with the electrical equipment when high electrical is removed from the electrical equipment. Means is provided for moving the interlock mechanism from the locked position to the unlocked position allow access to the electrical equipment when the residual electrical characteristic decreases below the predetermined reference value.

The panel may comprise a door. The reference means may include a reference voltage source for providing a predetermined reference voltage value. The monitoring means may include a residual voltage level detector for monitoring a residual voltage associated with the electrical equipment. The moving means may include an actuatable solenoid for, when actuated, moving the interlock mechanism from the locked position to the unlocked position allow access to the electrical equipment when the residual voltage associated with the electrical equipment decreases below the predetermined reference voltage value.

In accordance with yet another aspect of the present invention, a method of controlling access to a service area of a cabinet in which equipment is disposed comprises the steps of monitoring a residual electrical characteristic when high voltage applied to the equipment is removed, and releasing an interlock mechanism to allow access to the service area of the cabinet when the residual electrical characteristic decreases below a predetermined reference level. The step of monitoring may include the step of monitoring a residual voltage, and the step of releasing may include the step of releasing an interlock mechanism when the residual voltage decreases below a predetermined voltage level.

In accordance with still another aspect of the present invention, a method of servicing electrical equipment connectable to a high voltage source and disposed in a cabinet having an access opening and a panel which covers the access opening comprises the steps of monitoring a residual voltage associated with the electrical equipment when high voltage is removed from the electrical equipment, and moving an interlock mechanism from a locked position in which the panel covers the opening to prevent access to the electrical equipment to an unlocked position in which the panel can be opened or removed to allow service personnel to access the electrical equipment when the residual voltage decreases below a predetermined voltage value. The panel may comprise a door. The step of moving may include the step of actuating a solenoid to move a solenoid plunger to move the interlock mechanism from the locked position to the unlocked position.

An embodiment of the present invention will now be described, by way of example, with reference to the accompanying drawin which is a schematic block diagram of a cabinet with high voltage electrical equipment disposed therein.

The present invention is directed to an apparatus and method of controlling access to a service area of an equipment cabinet. The cabinet may house any type of electrical equipment to which high voltage is applied.

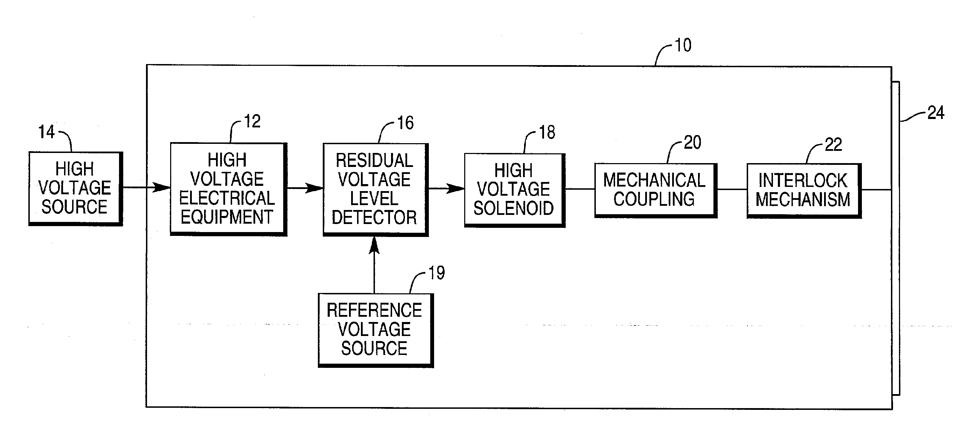

The figure is an equipment cabinet 10 houses high voltage electrical equipment 12 which receives high voltage from a high voltage source 14. High voltage from the high voltage source 14 provides a source of energy for the equipment 12 to operate. The cabinet 10 also houses a residual voltage level detector 16 for monitoring residual voltage from the equipment 12 when high voltage applied to the equipment 12 is disconnected or removed. The voltage level of the residual voltage from the equipment 12 tends to decrease over time after high voltage applied to the equipment 12 is disconnected or removed.

The cabinet 10 further houses an actuatable, high voltage solenoid 18 which has a plunger (not shown) mechanically coupled through a mechanical coupling 20 to an interlock mechanism 22 which, in turn, is mechanically coupled to a cover panel 24 of the cabinet 10. When the solenoid 18 is unactuated, the plunger is in a position such that the interlock mechanism 22 is in a locked position. When the interlock mechanism 22 is in the locked position, the cover panel 24 cannot be opened or removed by service personnel to gain access to the equipment 12.

The solenoid 18 actuates in response to an output signal from the residual voltage level detector 16. Preferably, the residual voltage level detector 16 provides an output signal to actuate the high voltage solenoid 18 when the detector 16 senses that the voltage level of residual voltage from the equipment 12 decreases below a predetermined reference voltage level from a reference voltage source 19. The predetermined voltage level may be at any voltage level depending upon the particular application or the particular industry in which the equipment 12 is used, for examples.

When the solenoid 18 actuates in response to the output signal from the detector 16, the plunger of the solenoid 18 operates through the mechanical coupling 20 to release the interlock mechanism 22. When the interlock mechanism 22 is released, the interlock mechanism 22 moves from the locked position to an unlocked position such that the cover panel 24 can be opened or removed by service personnel to gain access to the equipment 12.

A number of advantages result by providing an apparatus and method of controlling access to the equipment 12 in accordance with the present invention. One advantage is that the use of the residual voltage level detector 16 and the high voltage solenoid 18 allows the interlock mechanism 22 to be controlled such that the cover panel 24 is unable to be removed until residual voltage from the equipment 12 has decreased below the predetermined reference voltage level. This ensures that residual voltage from the equipment 12 has decreased below a certain voltage level before service personnel can open or remove the cover panel 24 to gain access to the equipment 12 to service the equipment 12.

Although the above description describes the residual voltage level detector 16, the high voltage solenoid 18, the mechanical coupling 20, and the interlock mechanism 22 as being located inside the cabinet 10, it is contemplated that some or all of these parts may be located outside the cabinet 10. Further, although the above description describes a voltage level of residual voltage being sensed, it is contemplated that some other electrical quantity or characteristic, such as a current level associated with residual voltage, be sensed. It is conceivable that the high voltage solenoid 18 be deactuated, instead of actuated as described hereinabove, to release the interlock mechanism 22 to allow the cover panel 24 to be opened or removed. Moreover, it is contemplated that a door or the like may be used in place of or in conjunction with the cover panel 24.

From the above description of the invention, those skilled in the art to which the present invention relates will perceive improvements, changes and modifications. Numerous substitutions and modifications can be undertaken without departing from the scope of the invention.

## Claims

1. An apparatus for controlling access to a service area of a cabinet in which equipment is disposed, the apparatus comprising:
means for monitoring a residual electrical characteristic when high voltage applied to the equipment is removed; and
means for releasing an interlock mechanism to allow access to the service area of the cabinet when the residual electrical characteristic decreases below a predetermined reference level.

2. An apparatus according to claim 1, wherein the monitoring means includes means for monitoring a residual voltage, and the releasing means includes means for releasing an interlock mechanism when the residual voltage decreases below a predetermined voltage level.

3. An apparatus comprising:
a cabinet including means defining an opening and a panel which covers the opening;
electrical equipment disposed in the cabinet and operable when high electrical energy is applied thereto;
an interlock mechanism moveable between a locked position in which the panel covers the opening to prevent access to the electrical equipment and an unlocked position in which the panel can be opened or removed to allow access to the electrical equipment;
reference means for providing a predetermined reference value;
means for monitoring a residual electrical characteristic associated with the electrical equipment when high electrical is removed from the electrical equipment; and
means for moving the interlock mechanism from the locked position to the unlocked position allow access to the electrical equipment when the residual electrical characteristic decreases below the predetermined reference value.

4. An apparatus according to claim 3, wherein the panel comprises a door.

5. An apparatus according to claim 3, wherein the reference means includes a reference voltage source for providing a predetermined reference voltage value.

6. An apparatus according to claim 5, wherein the monitoring means includes a residual voltage level detector for monitoring a residual voltage associated with the electrical equipment.

7. An apparatus according to claim 6, wherein the moving means includes an actuatable solenoid for, when actuated, moving the interlock mechanism from the locked position to the unlocked position allow access to the electrical equipment when the residual voltage associated with the electrical equipment decreases below the predetermined reference voltage value.

8. A method of controlling access to a service area of a cabinet in which equipment is disposed, the method comprising the steps of:
monitoring a residual electrical characteristic when high voltage applied to the equipment is removed; and
releasing an interlock mechanism to allow access to the service area of the cabinet when the residual electrical characteristic decreases below a predetermined reference level.

9. A method according to claim 8, wherein the step of monitoring includes the step of monitoring a residual voltage, and the step of releasing includes the step of releasing an interlock mechanism when the residual voltage decreases below a predetermined voltage level.

10. A method of servicing electrical equipment connectable to a high voltage source and disposed in a cabinet having an access opening and a panel which covers the access opening, the method comprising the steps of:
monitoring a residual voltage associated with the electrical equipment when high voltage is removed from the electrical equipment; and
moving an interlock mechanism from a locked position in which the panel covers the opening to prevent access to the electrical equipment to an unlocked position in which the panel can be opened or removed to allow service personnel to access the electrical equipment when the residual voltage decreases below a predetermined voltage value.
